(19) Europäisches Patentamt
European Patent Office
Office européen des brevets

(11) EP 4 353 768 A1

(12) **EUROPEAN PATENT APPLICATION**
published in accordance with Art. 153(4) EPC

(43) Date of publication:
**17.04.2024 Bulletin 2024/16**

(21) Application number: **22819070.8**

(22) Date of filing: **14.01.2022**

(51) International Patent Classification (IPC):
***C08G 69/46*** *(2006.01)* ***C08G 69/26*** *(2006.01)*

(52) Cooperative Patent Classification (CPC):
**C08G 69/26; C08G 69/28; C08G 69/46; D01F 6/60**

(86) International application number:
**PCT/CN2022/071923**

(87) International publication number:
**WO 2022/257462 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2021 CN 202110641293**

(71) Applicants:
- **Cathay Biotech Inc.**
**Shanghai 201203 (CN)**
- **Cibt America Inc.**
**Newark DE 19713 (US)**
- **Cathay (Jinxiang) Biomaterial Co., Ltd.**
**Jining, Shandong 272211 (CN)**

(72) Inventors:
- **QIN, Bingbing**
**Shanghai 201203 (CN)**
- **SUN, Chaoxu**
**Shanghai 201203 (CN)**
- **GAO, Yuanyan**
**Shanghai 201203 (CN)**
- **LIU, Xiucai**
**Shanghai 201203 (CN)**

(74) Representative: **Aera A/S**
**Niels Hemmingsens Gade 10, 5th Floor**
**1153 Copenhagen K (DK)**

(54) **POLYAMIDE RESIN AND PREPARATION METHOD THEREFOR, COMPOSITION, AND FIBER PRODUCT**

(57) The present disclosure provides a polyamide resin and a preparation method therefor, a composition, and a fiber product. The polyamide comprises diamine structural units and diacid structural units, wherein 90 mol% or more of the diacid structural units are derived from adipic acid, 90 mol% or more of the diamine structural units are derived from 1,5-pentanediamine, and the polyamide resin contains a water-extractable substance in a content of 0.7 wt.% or less. The water-extractable substance has a number average molecular weight of 2000 or less. The preparation method of the polyamide resin of the present disclosure is simple without using large-scale equipment, and the process parameters thereof are easy to control, thereby facilitating mass production thereof. The polyamide resin of the present disclosure has a long spinneret wipe cycle time and less broken filament times, and the obtained fiber has less broken filaments, low yarn unevenness, less dyed dark grain, a good dyeing effect, and an excellent elongation at break, breaking strength and a lower boiling water shrinkage, a high spinning yield and a high dyeing yield.

EP 4 353 768 A1

## Description

### Technical field

The present disclosure belongs to the field of polymer materials, and particularly relates to a polyamide resin, a preparation method therefor, a composition thereof, and a fiber product thereof.

### Background of Art

Polyamide has been widely used in materials for clothing, industrial materials, fibers, or general-purpose engineering plastics due to its excellent properties and ease of melt forming, thus attracting much attention. Polyamide 5X is a linear long-chain macromolecule synthesized from a bio-based pentanediamine and a series of diacids. Since the amide bonds tend to form hydrogen bonds, polyamide 5X fibers have high strength and good moisture absorption. During the polymerization of polyamide 5X, due to the occurrence of cyclization reaction, the macromolecular chain of the polymer will be broken into two segments during the intra-chain amide group exchange reaction, or the linear molecular substance with low molecular weight will undergo direct dehydration reaction, resulting in the production of oligomer. Generally speaking, a water-extractable substance is an oligomer, which is from a monomer to a decamer, such as a dimer and a trimer, including linear and cyclic structures.

Usually, the water-extractable substance cannot be processed and formed separately, and if a large amount of water-extractable substance enters the spinning section together with chips, it will not only cause serious consequences for the spinning process, but will also be a great waste of raw materials. If the content of dimer and trimer in the resin is relatively high, it will affect the molecular weight distribution of the chips, resulting in a series of negative effects such as a reduction in the strength of the protofilaments and an increase of the waste silk rate, etc. During the melt spinning process, these compounds will evaporate out of the melt and become gases, thus increasing the number of bubbles in the polyamide 5X melt. After the evaporated gas resolidifies, it will degrade the spinning environment and shorten the spinneret wipe cycle time. Moreover, the water-extractable substance in the polyamide 5X melt forms "weak spots" in the fibers, at which the breakage is prone to occur under the action of external forces (e.g., drawing force), causing difficulties in spinning. In addition, water-extractable substance is also prone to precipitation on the surface of the filaments, resulting in undesirable phenomena such as an increase in broken filaments, floating filaments, and broken monofilaments during drawing, a decrease in the strength of finished filaments, and a low finished product rate, and the like.

Therefore, it is an urgent problem to be solved in the prior art how to improve the undesirable phenomena such as short spinneret wipe cycle time, floating filaments, broken monofilament, and low finished product rate, etc., of polyamide 5X during the spinning process.

### Summary of the invention

In order to overcome the shortcomings of the existing technologies and products, one of the objects of the present disclosure is to provide a polyamide resin.

The polyamide comprises diamine structural units and diacid structural units, wherein 90 mol% or more of the diacid structural units are derived from adipic acid, 90 mol% or more of the diamine structural units are derived from 1,5-pentanediamine, and the polyamide resin contains a water-extractable substance with a number average molecular weight of 2,000 or less in a content of 0.7 wt.% or less.

According to some embodiments of the present disclosure, the content of the water-extractable substance is 0.6 wt.% or less, preferably 0.5 wt.% or less. The water-extractable substance is mainly oligomers emerging from monomers during the polymerization process.

According to some embodiments of the present disclosure, the polyamide resin has a number average molecular weight of 28,000 or more, preferably 30,000 to 45,000, and more preferably 30,000 to 40,000.

In some preferred embodiments of the present disclosure, when the content of the water-extractable substance (by wt.%) is within the range as defined above, the yellowing resistance of the resulting polyamide resin and the resin composition mentioned hereafter is improved.

In some preferred embodiments of the present disclosure, when the content of the water-extractable substance (by wt.%) is within the range as defined above, the spinneret wipe cycle time during the spinning process is greatly extended, and the production efficiency is also greatly improved.

In some preferred embodiments of the present disclosure, when the content of the water-extractable substance (by wt.%) is within the range as defined above, there are less broken filaments during the spinning process, and the polyamide fiber has high strength.

In some preferred embodiments of the present disclosure, when the content of the water-extractable substance (by wt.%) is within the range as defined above, the polyamide fiber has a low boiling water shrinkage and improved

dimensional stability.

In some preferred embodiments of the present disclosure, when the content of the water-extractable substance (by wt.%) is within the range as defined above, the polyamide fiber has low yarn unevenness and a good dyeing effect.

In some preferred embodiments of the present disclosure, when the content of the water-extractable substance (by wt.%) is within the range as defined above, the polyamide resin has a high finished product rate and a high dyeing M rate during the spinning process.

In some preferred embodiments of the present disclosure, the content of the water-extractable substance in the polyamide resin is 0.05 wt.% or more, preferably 0.1 wt.% or more, and more preferably 0.2 wt.% or more. When the content of the water-extractable substances is below the range as defined above, the performance of the polyamide fiber is degraded.

The content of the water-extractable substance in the polyamide resin is the percentage of the mass of the components that can be extracted into water after the extraction treatment to the mass of the polyamide resin before the extraction treatment when the polyamide resin is heated in deionized water for extraction treatment (e.g., when the polyamide resin is extracted with water at 97 °C to 100 °C for 24 hours).

Content of water-extractable substance (%) = (mass of polyamide resin before water extraction ($m_1$) - mass of polyamide resin after water extraction ($m_2$))/mass of polyamide resin before water extraction ($m_1$) $\times$ 100%.

The extraction, for example, is carried out by extracting polyamide resin using water at 97°C to 100 °C for 24 hours, and the mass ratio of polyamide resin to water is 1 : 48-51, e.g., 1 : 50.

Further, the method for determining the content of the water-extractable substance comprises steps of: drying the polyamide sample in an air blowing oven at 130 °C for 7 hours, then sealing it in an aluminum plastic bag and cooling it in a dryer, followed by accurately weighing about 2 g of the polyamide sample and recording the actual mass ($m_1$) of the polyamide sample; placing the polyamide sample in a 250 mL round-bottom flask, adding 100 mL of deionized water, heating the thus obtained mixture to reflux at 97 °C to 100 °C for 24 hours, removing the polyamide sample after extraction and washing it with deionized water for three times, then drying it in an air blowing oven at 130 °C for 7 hours, and transferring it to an aluminum plastic bag that is previously weighed, sealing it and cooling it in a dryer, then weighing the total weight of the aluminum plastic bag and the polyamide sample as well as the weight of the aluminum plastic bag, respectively, and subtracting the latter from the former to obtain the weight of the polyamide sample after water extraction ($m_2$); calculating the content of the water-extractable substance from the difference in weights of the polyamide sample before and after water extraction according to formula: Content of the water-extractable substance (%) = ($m_1$-$m_2$)/$m_1$ $\times$ 100%.

Further, when determining the content of the water-extractable substance in polyamide resin melt, the melt is placed in a closed container, cooled, and then sampled for testing according to the above method.

According to some embodiments of the present disclosure, the water-extractable substance has a number average molecular weight of 500 to 2,000.

For example, the water-extractable substance comprises one or two of the following structures:

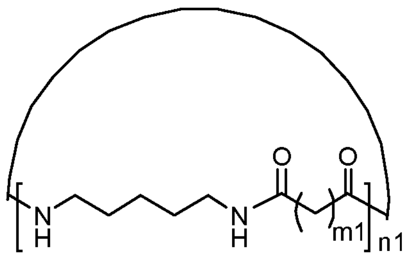 , 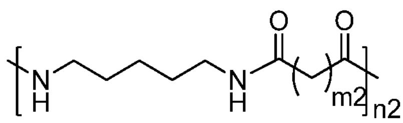 ,

wherein, n1 and n2 are respectively an integer selected from 1 to 8, preferably n1 and n2 are respectively an integer selected from 1 to 6, more preferably n1 and n2 are respectively an integer selected from 1 to 5, still preferably n1 is 2, 3 or 4; n2 is 2, 3, 4 or 5; m1 is 4 and m2 is 4.

According to some embodiments of the present disclosure, pentanediamine in the polyamide resin can be derived from chemistry-based materials or bio-based materials, and is preferably 1,5-pentanediamine derived from bio-based materials.

According to some embodiments of the present disclosure, 95 mol% or more, preferably 97 mol% or more of the diamine structural units in the polyamide resin are derived from 1,5-pentanediamine.

According to some embodiments of the present disclosure, the diamine structural units of the polyamide resin further comprise one or more structural units derived from butanediamine, hexanediamine, decanediamine, and dodecanediamine.

According to some embodiments of the present disclosure, 95 mol% or more, preferably 97 mol% or more of

the diacid structural units in the polyamide resin is derived from adipic acid.

According to some embodiments of the present disclosure, the diacid structural units of the polyamide resin further comprise one or more structural units derived from succinic acid, glutaric acid, pimelic acid, suberic acid, azelaic acid, sebacic acid, undecandioic acid, dodecanedioic acid, tridecanedioic acid, tetradecandioic acid, pentadecandioic acid, hexadecanedioic acid, heptadecanedioic acid, octadecandioic acid, terephthalic acid, isophthalic acid, and phthalic acid.

According to some embodiments of the present disclosure, the content of polyamide (main polymer) composed of diamine structural units and diacid structural units in the polyamide resin is 90 wt.% or more, preferably 95 wt.% or more, more preferably 97 wt.% or more, and still more preferably 99 wt.% or more. The diamine structural units and the diacid structural units conform to the above limitations.

According to some embodiments of the present disclosure, the polyamide resin contains an additive.

The additive includes, but is not limited to any one of an end capping agent, a nucleating agent, an antioxidant, a defoamer, and a flow modifier, or a combination thereof. The end capping agent includes lauric acid, stearic acid, benzoic acid, and acetic acid.

The additive includes, but is not limited to any one of lauric acid, stearic acid, benzoic acid, acetic acid, sodium hypophosphite, calcium hypophosphite, phosphorous acid, silicone defoamer, caprolactam, carbon black, nano calcium carbonate, titanium dioxide, and phthalocyanine compounds, or a mixture thereof.

In some preferred embodiments of the present disclosure, the content of an additive in the polyamide resin is less than or equal to 10 wt.%, preferably less than or equal to 5 wt.%, more preferably less than or equal to 3 wt.%, and more preferably less than or equal to 1 wt.%.

According to some embodiments of the present disclosure, the polyamide resin is polyamide 56 resin. The content of polyamide 56 in the polyamide 56 resin is 90 wt.% or more, preferably 95 wt.% or more, more preferably 97 wt.% or more, and further more preferably 99 wt.% or more.

According to some embodiments of the present disclosure, the polyamide resin has a moisture content of 200 to 2,000 ppm, preferably 250 to 1,200 ppm, and more preferably 300 to 1,000 ppm.

According to some embodiments of the present disclosure, the content of terminal amino group in the polyamide resin is 10 to 100 mol/ton, preferably 20 to 90 mol/ton, more preferably 30 to 80 mol/ton.

According to some embodiments of the present disclosure, the relative viscosity of the polyamide resin is 1.8 to 4.0, preferably 2.2 to 3.5, and more preferably 2.4 to 3.3.

Unless otherwise stated or obviously contradictory, the pressure in the present disclosure refers to gauge pressure.

A second object of the present disclosure is to provide a method for preparing the aforementioned polyamide resin.

According to some embodiments of the present disclosure, the method comprises the steps of:

S1, preparing a nylon salt solution in an inactive gas atmosphere;

S2, heating the nylon salt solution to increase the pressure of the nylon salt solution reaction system to 0.5-2.5 MPa, maintaining the pressure by degassing for 0.5 to 4 hours, and then depressurizing to reduce the pressure in the reaction system to 0-0.7 MPa (gauge pressure), then vacuumizing the reaction system to a vacuum of -0.05 to -0.08 MPa, thereby obtaining a polyamide melt; and

S3, discharging the obtained melt, and carrying out strand pelletizing to obtain polyamide chips.

Among them, in step S1, 1,5-pentanediamine and diacid are used in a molar ratio of (1-1.1) : 1 in order to prepare the nylon salt solution.

In step S2, after the process of maintaining pressure is completed, the reaction system has a temperature of 232 to 260 °C.

In step S2, after the process of depressurizing is completed, the reaction system has a temperature of 240 to 295 °C, and preferably 243 to 288 °C.

In step S2, after vacuumizing, the reaction system has a temperature of 250 to 290 °C, and preferably 252 to 285 °C.

In step S2, after vacuumizing, the vacuum of the reaction system is maintained for 11 to 75 minutes.

In step S3, the strand pelletizing is carried out in water at a water temperature of 15 to 50 °C. Polyamide chips or polyamide pellets are obtained upon the strand pelletizing described in step S3.

According to some embodiments of the present disclosure, the method further comprises the steps of:

S4, mixing the polyamide chips with water in a reactor to obtain a mixture, then replacing the air in the reactor with an inactive gas; and

S5, heating the mixture in an inactive gas atmosphere, filtering the mixture, rinsing the polyamide chips, and drying

the polyamide chips to obtain the polyamide resin.

In step S4, the reactor is a reactor capable of forming a closed environment. In step S4, the reactor can be, for example, a continuous extraction column or a batch reaction kettle.
Preferably, in step S4, replacing the air in the reactor includes vacuumizing the reactor with a vacuum pump and then refilling the reactor with an inactive gas. The above operation of replacing the air in the reactor can be repeated twice or more.
In step S4, the water is deionized water, preferably deionized water subjected to deoxygenation treatment, wherein the deoxygenation treatment can be one of thermal deoxygenation, ultrasonic deoxygenation, vacuum deoxygenation, chemical deoxygenation, analytical deoxygenation, or any other deoxygenation methods, or a combination thereof. In some preferred embodiments, the content of the dissolved oxygen in deionized water after the deoxygenation treatment is less than or equal to 0.5 mg/L, and preferably less than or equal to 0.1 mg/L.
In step S4, the mass of the deionized water is 1 time or more, preferably 2 times or more, for example 1 to 12 times, 1 to 10 times, 2 to 10 times, 2 to 6 times, 1.5 times, 2.3 times, 2.5 times, 3 times, 5 times, or 8 times than that of the polyamide pellets.
In step S 1, step S4 and step S5, the inactive gas is one or more selected from nitrogen gas, argon gas, helium gas, etc, and more preferably one or more selected from high-purity nitrogen gas, high-purity argon gas, and high-purity helium gas.
According to some embodiments of the present disclosure, in step S4, during the operation of replacing air, after vacuumizing to a vacuum of -0.1 MPa to 0.001 MPa (gauge pressure) and maintaining for 5 to 20 minutes, an inactive gas is re-filled, and more preferably the operation of replacing air is repeated for 5 to 15 times, and more preferably 8 to 10 times.
According to some embodiments of the present disclosure, in step S5, the mixture is heated for 4 to 50 hours, and preferably 8 to 45 hours.
According to some embodiments of the present disclosure, in step S5, the mixture is heated at a temperature of 80 to 140 °C, and more preferably 85 to 120 °C.
According to some embodiments of the present disclosure, in step S5, the polyamide chips are rinsed with hot water at a temperature of 50 °C to 100 °C.
According to some embodiments of the present disclosure, in step S5, the polyamide chips are dried by one or more selected from vacuum drying, freeze-drying, airflow drying, microwave drying, infrared drying, and high-frequency drying.
According to some embodiments of the present disclosure, a method for preparing the polyamide resin comprises the steps of:

(1) mixing the polyamide chips with water in a reactor, then replacing the air in the reactor with an inactive gas; and
(2) heating the mixture in an inactive gas atmosphere, filtering the polyamide chips, rinsing the polyamide chips, and drying the polyamide chips to obtain the polyamide resin.

The polyamide chips described in step (1) are commercially available polyamide chips, polyamide chips prepared according to the above methods including S1-S3 or polyamide chips prepared according to other methods. In step (1), the reactor is selected from a continuous extraction column and a batch reaction kettle. The operation method of replacing the air in the reactor includes vacuumizing the reactor using a vacuum pump and then refilling it with an inactive gas. The operation of replacing the air in the reactor is repeated twice or more. The water is deionized water, preferably deionized water subjected to deoxygenation treatment. The mass of water is 1 time or more, preferably 2 times or more, for example 1 to 12 times, 2 to 10 times, 2 to 6 times, such as 3 times, 5 times, 8 times, or 10 times than that of the polyamide pellets. In step (1) and step (2), the inactive gas is one or more selected from nitrogen gas, argon gas, and helium gas, etc.
In step (2), the heating time is 4 to 50 hours, preferably 8 to 45 hours; the heating temperature is 80 to 140 °C, and further 85 to 120 °C; the rinsing is carried out with hot water at a temperature of 50 °C to 100 °C; and the drying is one or more selected from vacuum drying, freeze-drying, airflow drying, microwave drying, infrared drying, and high-frequency drying.
A third object of the present disclosure is to provide a resin composition, which includes any of the above polyamide resin.
A fourth object of the present disclosure is to provide a fiber, which is prepared using any of the above polyamide resin as a raw material.
In some embodiments, the fiber has a breaking strength of 3.3 to 10.0 cN/dtex, preferably 3.5 to 9.0 cN/dtex, more preferably 4.0 to 8.5 cN/dtex, 3.0 to 7.0 cN/dtex, 4.0 to 10.0 cN/dtex, or 4.0 to 6.0 cN/dtex, for example 5 cN/dtex, 6 cN/dtex, or 7 cN/dtex.

In some embodiments, the fiber has an elongation at break of 10% to 90%, preferably 15% to 80%, more preferably 18% to 55%, for example 20%, 25%, 35%, 40%, or 47%.

In some embodiments, the fiber has a boiling water shrinkage of 1.0% to 13.8%, preferably 3.0% to 12.0%, 3.0% to 10.0%, or 3.0% to 7.0%, for example 4.5%, 5%, 6.5%, 7%, or 8%.

In some embodiments, the fiber has a linear density of 11 to 2330 dtex, preferably 33.0 to 933 dtex, 44.0 to 555 dtex, 30 to 100 dtex, or 30 to 60 dtex, for example 130 dtex, 220 dtex, 300 dtex, or 400 dtex.

In some embodiments, the fiber has yarn unevenness of less than or equal to 1.5%, preferably less than or equal to 1.3%, more preferably less than or equal to 1.2%, and even more preferably less than or equal to 1.0%.

In some embodiments, the fiber has a finished product rate of 96% or more, preferably 97% or more, and more further 98% or more.

In some embodiments, the fiber has a dyeing M rate of 96% or more, preferably 97% or more, more preferably 98% or more, still more preferably 98.5% or more, and even more preferably 99% or more.

In some embodiments, the fiber has broken yarn times of less than or equal to 2 (times/24 hours), preferably less than or equal to 1 (time/24 hours), and more preferably 0 (time/24 hours).

In some embodiments, the number of broken filaments of the fiber has a number of broken filaments of less than or equal to 3 (broken filaments/9 kg package), preferably less than or equal to 2 (broken filaments/9 kg package), and more preferably less than or equal to 1 (broken filament/9 kg package).

A fifth object of the present disclosure is to provide a method for preparing the aforementioned fiber, which comprises the steps of:

(a) heating the polyamide resin to a molten state so as to form a polyamide melt;
(b) spinning the polyamide melt to form an as-spun yarn; and
(c) post-processing the as-spun yarn to obtain the polyamide fiber.

The post-processing includes a cooling treatment, and/or a drawing treatment, and/or a winding treatment, and/or a setting treatment.

According to some embodiments of the present disclosure, during the fiber preparation process, the spinneret wipe cycle is less than or equal to 3 (times/24 hours), preferably less than or equal to 2 (times/24 hours), and more preferably less than or equal to 1 (time/24 hours).

According to some embodiments of the present disclosure, the fiber obtained in step (c) includes preoriented yarns (POY), medium oriented yarns (MOY), high-oriented yarns (HOY), draw textured yarns (DTY), full-drawn yarns (FDY), industrial yarns (IDY), bulky continuous filaments (BCF), short fibers, and monofilament fibers.

Compared with the prior art, the present disclosure has at least the following advantages:

1. the preparation method of the polyamide resin of the present disclosure is simple without using large-scale equipment, and the process parameters thereof are easy to control, thereby facilitating mass production thereof; and
2. the polyamide resin of the present disclosure has less water-extractable substances, a long spinneret wipe cycle time and less broken filament times, and the obtained polyamide fiber has less broken filaments, low yarn unevenness of fiber, less dyed dark grain, a good dyeing effect, and the fiber has an excellent elongation at break, a breaking strength, a lower boiling water shrinkage, a high spinning yield and a high dyeing yield.

## Detailed description

In order to make the purpose, technical solutions, and advantages of the present disclosure more clear, the technical solutions in the embodiments of the present disclosure will be described clearly and completely below in conjunction with the embodiments of the present disclosure. Obviously, the described embodiments are only part of the embodiments of the present disclosure rather than all of the embodiments. Based on the embodiments in the present disclosure, all other embodiments obtained by ordinary persons skilled in the art without creative work belong to the scope of protection of the disclosure.

1. Method for measuring relative viscosity $\eta r$

The relative viscosity is measured by the concentrated sulfuric acid method using the Ubbelohde viscometer, which comprises the steps of: 0.5±0.0002 g of dried polyamide sample is accurately weighed, and dissolved by adding 50 mL of concentrated sulfuric acid (98%), the flow time of the concentrated sulfuric acid $t_0$ and the flow time of the polyamide solution t in a water bath at a constant temperature of 25°C are measured and recorded.

The formula for calculating relative viscosity is as follows:

$$\text{Relative viscosity } \eta r = t/t_0$$

wherein t is the flow time of the polyamide solution; $t_0$ is the flow time of the concentrated sulfuric acid solvent.

2. Moisture content

The moisture content is determined by Karl Fischer moisture titrimeter using 1 g of resin sample at a temperature of 200 °C for a testing time of 20 minutes.

3. Determination of terminal amino group content

After the sample is dissolved with trifluoroethanol, it is titrated with hydrochloric acid standard solution and sodium hydroxide standard solution, then the content of terminal amino group is calculated.

4. Determination of number average molecular weight (unit: g/mol)

The number average molecular weight is determined by gel permeation chromatography (GPC).

5. Determination of content of water-extractable substance in polyamide resin

The polyamide sample is dried in an air blowing oven at 130 °C for 7 hours, then sealed in an aluminum plastic bag and cooled in a dryer, about 2 g of the polyamide sample is accurately weighed and the actual mass ($m_1$) of the polyamide sample is recorded. The polyamide sample is placed in a 250 mL round-bottom flask, 100 mL of deionized water is added thereto, and heated to reflux at 97 °C to 100 °C for 24 hours, the polyamide sample is extracted with water and washed with deionized water for three times, then dried in an air blowing oven at 130 °C for 7 hours, then transferred to an aluminum plastic bag that is previously weighed, sealed and then cooled in a dryer, the total weight of the aluminum plastic bag and the polyamide sample as well as the weight of the aluminum plastic bag are weighed, respectively, and the latter is subtracted from the former to obtain the weight of the polyamide sample after water extraction ($m_2$). The content of the water-extractable substance is calculated from the difference in weights of the polyamide sample before and after water extraction according to formula: Content of the water-extractable substance (%)=$(m_1 - m_2)/m_1 \times 100\%$.

Further, when determining the content of the water-extractable substance in polyamide resin melt, the melt is placed in a closed container, cooled, and then sampled for testing according to the above method.

6. Linear density

The linear density is determined according to GB/T 14343-2008.

7. Boiling water shrinkage

The boiling water shrinkage is determined according to GB/T 6505-2008.

8. Broken filament times

Broken filament times (times/24 hours) are manually counted. Fewer broken filament times are considered to mean better spinnability.

9. Yarn unevenness

The yarn unevenness is determined according to GB/T 14346-93.

10. Finished product rate of fiber

Finished product rate = (weight of finished fiber prepared/total weight of resin input) × 100%.

11. Dyeing M rate

The dyeing evenness of the polyamide fiber prepared by the above preparation method is determined using the dyeing evenness method (ASTMZ7667-B999), and the dyeing M rate is determined using a 5-grade color judgment standard method.

M rate = (number of fibers with dyeing evenness of greater than or equal to 4.5)/total number of all dyed fibers) × 100%.

12. Number of broken filaments

The number of broken filaments is determined manually.

13. Breaking strength and elongation at break

They are measured with reference to *Testing method for tensile of man-made filament yarns* in GB/T 14344-2008 under conditions of a pretension force of 0.05±0.005 cN/dtex and a clamping distance of 500 mm and a drawing speed of 500 mm/min.

14. Spinneret wipe cycle

The spinneret wipe cycle is manually calculated.

Preparation Example 1

(1) Under a nitrogen gas atmosphere, 1,5-pentanediamine, adipic acid, and water were mixed uniformly at a molar ratio of 1,5-pentanediamine to adipic acid of 1.08 : 1, to prepare a 60 wt.% nylon salt solution, the percentage being a mass percentage based on the nylon salt solution; the nylon salt solution was sampled, and it had a pH value of 7.85 when diluted to a concentration of 10 wt.%.
(2) The above solution was heated to increase the pressure in the reaction system to 2.3 MPa over 1.5 hours, and then the pressure was maintained by degassing for 3 hours. At the end of the pressure maintaining process, the temperature of the reaction system was 245 °C, and then the pressure in the reaction system was depressurized to 0.003 MPa (gauge pressure) over 1 hour. At the end of depressurization, the temperature of the reaction system was 273 °C. The reaction system was vacuumized for 32 minutes and maintained at a vacuum of -0.06 MPa, the temperature of the reaction system after vacuumization was 272 °C, and the polyamide 56 melt was obtained.
(3) The melt obtained in step (2) was discharged, and strand pelletizing was carried out in water at a water temperature of 20 °C to obtain the polyamide 56 chips.

Preparation Example 2

(1) Under a nitrogen gas atmosphere, 1,5-pentanediamine, adipic acid, decanedioic acid (which account for 3wt.% of adipic acid) and water were mixed uniformly at a molar ratio of 1,5-pentanediamine to the sum of adipic acid and decanedioic acid of 1.06 : 1, to obtain a 62 wt.% nylon salt solution, the percentage being a mass percentage based on the nylon salt solution; the nylon salt solution was sampled, and it had a pH value of 8.4 when diluted to a concentration of 10 wt.%. Then 2% of caprolactam, 400 ppm of acetic acid, 600 ppm of benzoic acid, 10 ppm of defoamer, and 18 ppm of sodium hypophosphite were added to the nylon salt solution;
(2) The above solution was heated to increase the pressure in the reaction system to 2.1 MPa over 1.5 hours, and

then the pressure was maintained by degassing for 3 hours. At the end of the pressure maintaining process, the temperature of the reaction system was 245 °C. The pressure was reduced again to 0.5 MPa, at which point a formulated $TiO_2$ aqueous solution (which had a $TiO_2$ content of 15 wt.%) was added at a weight ratio of titanium dioxide to the nylon salt being 0.3%, then the pressure in the reaction system was reduced to 0.004 MPa (gauge pressure) over 1 hour. At the end of depressurization, the temperature of the reaction system was 276 °C. The reaction system was vacuumized for 30 minutes and maintained at a vacuum of -0.07 MPa, the temperature of the reaction system after vacuumization was 273 °C, and the polyamide melt was obtained.

(3) The melt obtained in step (2) was discharged; strand pelletizing was carried out in water at a water temperature of 21 °C to obtain the polyamide chips.

Example 1-A

(a) The polyamide 56 chips prepared in Preparation Example 1 were added to a reaction kettle, then deoxidized deionized water was added at a mass ratio of the chips to the deoxidized deionized water of 1 : 6. Air was replaced with nitrogen gas, and the specific operation method included vacuumizing with a vacuum pump to a vacuum of -0.08 MPa (gauge pressure), maintaining the vacuum for 12 minutes, then filling with nitrogen gas and repeating the nitrogen gas replacement 9 times.

(b) Under a $N_2$ gas atmosphere, the mixture was heated at 98 °C for 45 hours, then filtered, the chips were separated from water and rinsed with hot water at 94 °C, then vacuum dried at 103 °C for 18 hours to give the polyamide 56 resin.

Examples 1-B

(a) The polyamide chips prepared in Preparation Example 2 were added to a reaction kettle, then deoxidized deionized water was added at a mass ratio of the chips to deoxidized deionized water of 1 : 6. Air was replaced with nitrogen gas, and the specific operation method included vacuumizing with a vacuum pump to a vacuum of -0.08 MPa (gauge pressure), maintaining the vacuum for 11 minutes, then filling with nitrogen gas and repeating the nitrogen gas replacement 9 times.

(b) Under a $N_2$ gas atmosphere, the mixture was heated at 98 °C for 45 hours, and then filtered; the chips were separated from water and rinsed with hot water at 95 °C, then vacuum dried at 103 °C for 18 hours to give the polyamide resin.

Example 2

(a) The polyamide 56 chips prepared in Preparation Example 1 were added to a reaction kettle, then deoxidized deionized water was added at a mass ratio of the chips to deoxidized deionized water of 1 : 6. Air was replaced with nitrogen gas, the specific operation method included vacuumizing with a vacuum pump to a vacuum of -0.09 MPa (gauge pressure), maintaining that vacuum for 10 minutes, then filling with nitrogen gas and repeating the nitrogen gas replacement 9 times.

(b) Under a $N_2$ gas atmosphere, the mixture was heated at 90 °C for 32 hours, and then filtered, the chips were separated from water and rinsed with hot water at 95 °C, then vacuum dried at 105 °C for 15 hours to give the polyamide 56 resin.

Example 3

(a) The polyamide 56 chips prepared in Preparation Example 1 were added to a reaction kettle, then deoxidized deionized water was added at a mass ratio of the chips to deoxidized deionized water of 1 : 3. Air was replaced with nitrogen gas, and the specific operation method included vacuumizing with a vacuum pump to a vacuum of -0.07 MPa (gauge pressure), maintaining the vacuum for 10 minutes, then filling with nitrogen gas and repeating the nitrogen gas replacement 5 times.

(b) Under a $N_2$ gas atmosphere, the mixture was heated at 96 °C for 48 hours, and then filtered, the chips were

separated from water and rinsed with hot water at 95 °C, then vacuum dried at 105 °C for 15 hours to give the polyamide 56 resin.

Example 4

(a) The polyamide 56 chips prepared in Preparation Example 1 were added to a reaction kettle, then deoxidized deionized water was added at a mass ratio of the chips to deoxidized deionized water of 1 : 6. Air was replaced with nitrogen gas, and the specific operation method included vacuumizing with a vacuum pump to a vacuum of -0.08 MPa (gauge pressure), maintaining the vacuum for 10 minutes, then filling with nitrogen gas and repeating the nitrogen gas replacement 10 times.
(b) Under a $N_2$ gas atmosphere, the mixture was heated at 95 °C for 35 hours, and then filtered, the chips were separated from water and rinsed with hot water at 60 °C, then vacuum dried at 105 °C for 15 hours to give the polyamide 56 resin.

Example 5

(1) Under a nitrogen gas atmosphere, 1,5-pentanediamine, adipic acid, and water were mixed uniformly at a molar ratio of 1,5-pentanediamine to adipic acid of 1 : 1, to prepare a 70 wt.% nylon salt solution, the percentage being a mass percentage based on the nylon salt solution; the nylon salt solution was sampled, and it had a pH value of 7.96 when diluted to a concentration of 10 wt.%.
(2) The above solution was heated to increase the pressure in the reaction system to 2.0 MPa over 1.5 hours, then the pressure was maintained at 2.40 MPa by degassing for 3 hours. At the end of the pressure maintaining process, the temperature of the reaction system was 243 °C, and then the pressure in the reaction system was depressurized to 0.005 MPa (gauge pressure) over 1 hour. At the end of depressurization, the temperature of the reaction system was 290 °C. The reaction system was vacuumized for 30 minutes and maintained at a vacuum of -0.08 MPa, the temperature of the reaction system after vacuumization was 290 °C, and the polyamide 56 melt was obtained.
(3) The melt obtained from step (2) was discharged, strand pelletizing was carried out.
(4) The polyamide 56 chips were added to a reaction kettle, then deoxidized deionized water was added at a mass ratio of the chips to deoxidized deionized water of 1 : 6. Air was replaced with nitrogen gas, and the specific operation method included vacuumizing with a vacuum pump to a vacuum of -0.07 MPa (gauge pressure), maintaining the vacuum for 10 minutes, then filling with nitrogen gas and repeating the nitrogen gas replacement 10 times.
(5) The reaction mixture obtained in step (4) was protected by introducing with $N_2$, and heated at 96 °C for 46 hours, and then filtered, the chips were separated from water and rinsed with water at 95 °C, then vacuum dried at 105 °C for 15 hours to give the polyamide 56 resin.

Example 6

(a) The polyamide 56 chips prepared in Preparation Example 1 were added to a reaction kettle, then deoxidized deionized water was added at a mass ratio of the chips to deoxidized deionized water of 1 : 12. Air was replaced with nitrogen gas, and the specific operation method included vacuumizing with a vacuum pump to a vacuum of -0.09 MPa (gauge pressure), maintaining the vacuum for 10 minutes, then filling with nitrogen gas and repeating the nitrogen gas replacement 10 times.
(b) The reaction mixture obtained in step (a) was protected by introducing with $N_2$ gas, and heated at 95 °C for 50 hours, and then filtered, the chips were separated from water and rinsed with hot water at 95 °C, then vacuum dried at 105 °C for 15 hours to give the polyamide 56 resin.

Example 7-A

(a) The polyamide 56 chips prepared in Preparation Example 1 were added to a reaction kettle, then deoxidized deionized water was added at a mass ratio of the chips to the deoxidized deionized water of 1 : 20. Air was replaced

with nitrogen gas, and the specific operation method included vacuumizing with a vacuum pump to a vacuum of -0.09 MPa (gauge pressure), maintaining the vacuum for 10 minutes, then filling with nitrogen gas and repeating the nitrogen gas replacement 10 times.
(b) Under a $N_2$ gas atmosphere, the reaction mixture was heated at 95 °C for 50 hours, then filtered, the chips were separated from water and rinsed with hot water at 95 °C, then vacuum dried at 105 °C for 15 hours to obtain the polyamide 56 resin.

Example 7-B

(a) The polyamide 56 chips prepared in Preparation Example 1 were added to a reaction kettle, then deoxidized deionized water was added at a mass ratio of the chips to deoxidized deionized water of 1 : 40. Air was replaced with nitrogen gas, and the specific operation method included vacuumizing with a vacuum pump to a vacuum of -0.09 MPa (gauge pressure), maintaining the vacuum for 10 minutes, then filling with nitrogen gas and repeating the nitrogen gas replacement 10 times.
(b) Under a $N_2$ gas atmosphere, the reaction mixture was heated at 95 °C for 50 hours.

Then filtered, the chips were separated from water, and the separated chips was used as raw materials, the steps (a) - (b) were repeated three times and then the chips were rinsed with hot water at 95 °C, then vacuum dried at 105 °C for 15 hours to give the polyamide 56 resin.

Example 7-C

(1) Under a nitrogen gas atmosphere, 1,5-pentanediamine, adipic acid, and water were mixed uniformly at a molar ratio of 1,5-pentanediamine to adipic acid of 1.05 : 1, to prepare a 60 wt.% nylon salt solution, the percentage being a mass percentage based on the nylon salt solution; the nylon salt solution was sampled, and it had a pH value of 7.98 when diluted to a concentration of 10 wt.%.
(2) The above solution was heated to increase the pressure in the reaction system to 2.0 MPa over 1.5 hours, and then the pressure was maintained by degassing for 3 hours. At the end of the pressure maintaining process, the temperature of the reaction system was 243 °C, and then the pressure in the reaction system was reduced to 0.005 MPa (gauge pressure) over 1 hour. At the end of depressurization, the temperature of the reaction system was 290 °C. The reaction system was vacuumized for 30 minutes and maintained at a vacuum of -0.08 MPa, the temperature of the reaction system after vacuumization was 290 °C, and the polyamide 56 melt was obtained.
(3) The melt obtained in step (2) was discharged, and strand pelletizing was carried out in water at a water temperature of 20 °C.
(4) The chips were vacuum dried at 105 °C for 15 hours to give the polyamide 56 resin.

Example 8

The polyamide 56 resin prepared in Example 1-A was fed into a spinning equipment through a feeder, and then after heating, evenly distributed into the spin pack by a single screw. The temperature of the spinning manifold was 280 °C. After being ejected through the spinneret, it became a melt streamlet, wherein the spinneret plate had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were drawn to the first and second godets and then wound into a spinning cake on a winding machine at a winding speed of 4300 m/min to obtain the preoriented yarns (POY).

Example 9

The polyamide 56 resin prepared in Example 1-A was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43 m/s. After application of the spin finish

and passage through the spinning channels, the cooled and formed tows were drawn to the first and second pairs of heating godets with a winding speed of 4800 m/min, a drafting ratio of 1.5 and a setting temperature of 155 °C to obtain the nylon 56 full drawn yarns (FDY).

Example 10

The polyamide 56 resin prepared in Example 1-A was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 51 orifices, each with a diameter of 0.2 mm and a depth of 0.6 mm. It was cooled and formed by a side-blowing device at a wind temperature of 22 °C, a wind humidity of 83% and a wind speed of 0.4m/s. After application of the spin finish and passage through the spinning channels, the cooled and formed tows were drawn to the first and second godets at a winding speed of 4200 m/min to produce the polyamide 56 preoriented yarns. The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Example 11

The polyamide 56 resin prepared in Example 3 was fed into a spinning equipment through a feeder, and then after heating, evenly distributed into the spin pack through a single screw. The temperature of the spinning manifold was 280 °C. After being ejected through the spinneret, it became a melt streamlet, wherein the spinneret plate had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were pulled to the first and second godets and then wound into a spinning cake on a winding machine at a winding speed of 4300 m/min to obtain the preoriented yarns (POY).

Example 12

The polyamide 56 resin prepared in Example 3 was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43m/s. After application of the spin finish and passage through the spinning channels, the cooled and formed tows were drawn to the first and second pairs of heating godets with a winding speed of 4800 m/min, a drafting ratio of 1.5 and a setting temperature of 155 °C to obtain the nylon 56 full drawn yarns (FDY).

Example 13

The polyamide 56 resin prepared in Example 3 was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 51 orifices, each with a diameter of 0.2 mm and a depth of 0.6 mm. It was cooled and formed by a side-blowing device at a wind temperature of 22 °C, a wind humidity of 83% and a wind speed of 0.4m/s. After application of the spin finish and passage through the spinning channels, the cooled and formed tows were drawn to the first and second godets at a winding speed of 4200 m/min to produce the polyamide 56 preoriented yarns. The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Example 14

The polyamide 56 resin prepared in Example 4 was fed into a spinning equipment through a feeder, and then after heating, evenly distributed into the spin pack through a single screw. The temperature of the spinning manifold was 280 °C. After being ejected through the spinneret, it became a melt streamlet, wherein the spinneret plate had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were drawn to the first and second godets ,

and then wound into a spinning cake on a winding machine at a winding speed of 4300 m/min to obtain the preoriented yarns (POY).

Example 15

The polyamide 56 resin prepared in Example 4 was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43m/s. After application of the spin finish and passage through the spinning channels, the cooled and formed tows were pulled to the first and second pairs of heating godets with a winding speed of 4800 m/min, a drafting ratio of 1.5 and a setting temperature of 155 °C to obtain the nylon 56 full drawn yarns (FDY).

Example 16

The polyamide 56 resin prepared in Example 4 was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret had 51 orifices, each with a diameter of 0.2 mm and a depth of 0.6 mm. It was cooled and formed by a side-blowing device at a wind temperature of 22 °C, a wind humidity of 83% and a wind speed of 0.4 m/s. After application of the spin finish and passage through the spinning channels, the cooled and formed tows were drawn to the first and second godets at a winding speed of 4200 m/min to produce the polyamide 56 preoriented yarns (POY). The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Example 17

The polyamide 56 resin prepared in Example 7-B was fed into a spinning equipment through a feeder, and then after heating, evenly distributed into the spin pack through single screw heating. The temperature of the spinning manifold was 280 °C. After being ejected through the spinneret, it became a melt streamlet, wherein the spinneret plate had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were drawn to the first and second godets , and then wound into a spinning cake on a winding machine at a winding speed of 4300 m/min to obtain the preoriented yarns (POY).

Example 18-A

The polyamide 56 resin prepared in Example 7-A was fed into the spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43 m/s. After application of the spin finish and passage through the spinning channels, the cooled and formed tows were drawn to the first and second pairs of heating godets with a winding speed of 4800 m/min, a drafting ratio of 1.5 and a setting temperature of 155 °C to obtain the nylon 56 full drawn yarns (FDY).

Example 18-B

The polyamide 56 resin prepared in Example 7-B was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43 m/s. After application of the spin finish and passage through the spinning channels, the cooled and formed tows were drawn to the first and second pairs of heating godets with a winding speed of 4800 m/min, a drafting ratio of 1.5 and a setting temperature of 155 °C to give the nylon 56 full drawn yarns (FDY).

Example 19

The polyamide 56 resin prepared in Example 7-B was fed into a spinning equipment through a feeder, and then after heatig, evenly distributed into the spin pack through a single screw. The temperature of the spinning manifold was 283 °C. After being ejected through the spinneret, it became a melt streamlet, wherein the spinneret plate had 51 orifices, each with a diameter of 0.2 mm and a depth of 0.6 mm. It was cooled and formed by a side-blowing device at a wind temperature of 22 °C, a wind humidity of 83% and a wind speed of 0.4 m/s. After application of the spin finish and passage through the spinning channels, the cooled and formed tows were drawn to the first and second godets at a winding speed of 4200 m/min to produce the polyamide 56 preoriented yarns (POY). The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Example 20

The polyamide resin prepared in Example 1-B was fed into a spinning equipment through a feeder, and then after heating, evenly distributed into the spin pack through a single screw. The temperature of the spinning manifold was 280 °C. After being ejected through the spinneret, it became a melt streamlet, wherein the spinneret plate had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were drawn to the first and second godets , and then wound into a spinning cake on a winding machine at a winding speed of 4300 m/min to obtain the preoriented yarns (POY).

Example 21

The polyamide resin prepared in Example 1-B was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter 0.22 mm and a depth of 0.605 mm. It was cooled and formed by a side-blowing device at a wind temperature of 21 °C, a wind humidity of 90% and a wind speed of 0.43 m/s. After application of the spin finish and passage through the spinning channels, the cooled and formed tows were drawn to the first and second pairs of heating godets with a winding speed of 4800 m/min, a drafting ratio of 1.5 and a setting temperature of 155 °C to obtain the nylon full drawn yarns (FDY).

Example 22

The polyamide resin prepared in Example 1-B was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 51 orifices, each with a diameter of 0.2 mm and a depth of 0.6 mm. It was cooled and formed by a side-blowing device at a wind temperature of 22 °C, a wind humidity of 83% and a wind speed of 0.4m/s. After application of the spin finish and passage through the spinning channels, the cooled and formed tows were drawn to the first and second godets , at a winding speed of 4200 m/min to produce the polyamide preoriented yarns (POY). The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Example 23

The polyamide 56 resin prepared in Example 7-C was fed into a spinning equipment through a feeder, and then after heating, evenly distributed into the spin pack through a single screw. The temperature of the spinning manifold was 280 °C. After being ejected through the spinneret, it became a melt streamlet, wherein the spinneret had 48 orifices, each with a diameter of 0.25 mm and a depth of 0.75 mm. It was cooled and formed by a side-blowing device at a wind temperature of 22 °C, a wind humidity of 85% and a wind speed of 0.45 m/s. After application of the spin finish and passage through the spinning channels, the cooled and formed tows were drawn to the first and second godets, and then wound into a spinning cake on a winding machine at a winding speed of 4300 m/min to obtain the preoriented yarns (POY).

Example 24

The polyamide 56 resin prepared in Example 7-C was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 36 orifices, each with a diameter of 0.22 mm and a depth of 0.605 mm. It was cooled and formed by a side-blowing device at a wind temperature of 21 °C, a wind humidity of 90% and a wind speed of 0.43 m/s. After application of the spin finish and passage through the spinning channels, the cooled and formed tows were drawn to the first and second pairs of heating godets with a winding speed of 4800 m/min, a drafting ratio of 1.5 and a setting temperature of 155 °C to obtain the nylon 56 full drawn yarns (FDY).

Example 25

The polyamide 56 resin prepared in Example 7-C was fed into a spinning equipment through a feeder, and then after heating, evenly distributed into the spin pack through a single screw. The temperature of the spinning manifold was 283 °C. After being ejected through the spinneret, it became a melt streamlet, wherein the spinneret plate had 51 orifices, each with a diameter of 0.2 mm and a depth of 0.6 mm. It was cooled and formed by a side-blowing device at a wind temperature of 22 °C, a wind humidity of 83% and a wind speed of 0.4 m/s. After application of the spin finish and passage through the spinning channels, the cooled and formed tows were drawn to the first and second godets at a winding speed of 4200 m/min to produce the polyamide 56 preoriented yarns (POY). The preoriented yarns were drawn, twisted, set and gridded on a texturing machine to obtain the draw textured yarns (DTY) with a processing speed of 550 m/min, a draw ratio of 1.28, a D/Y ratio of 1.65, and a heating box temperature of 185 °C.

Table 1 Performance Test Results of Polyamide Resin

| | Relative viscosity | Number average molecular weight of polyamide resin (g/mol) | Moisture content (ppm) | Content of terminal amino group (m ol/ton) | Content of water-extracta ble substance (%) | Number average molecular weight of water-extra ctable substance (g/mol) |
|---|---|---|---|---|---|---|
| Example 1-A | 2.76 | 35140 | 453 | 52.4 | 0.25 | 1452 |
| Examples 1-B | 2.78 | 35272 | 462 | 52.2 | 0.27 | 1684 |
| Example 2 | 2.75 | 35159 | 425 | 52.1 | 0.42 | 1573 |
| Example 3 | 2.76 | 35332 | 436 | 51.8 | 0.38 | 1615 |
| Example 4 | 2.77 | 35162 | 442 | 52.8 | 0.35 | 1382 |
| Example 5 | 2.75 | 35148 | 468 | 53.0 | 0.30 | 1750 |
| Example 6 | 2.75 | 35212 | 434 | 52.0 | 0.21 | 1545 |
| Example 7-A | 2.75 | 35212 | 435 | 52.0 | 0.12 | 1672 |
| Example 7-B | 2.75 | 35237 | 439 | 52.0 | 0.08 | 1470 |
| Example 7-C | 2.76 | 35180 | 445 | 51.5 | 0.65 | 1572 |

Table 2 Performance Test Results of POY Fiber

| Fiber | Resin raw material | Fiber type | Linear density (dtex) | Elongation at break (%) | Breaking strength (cN/dtex) | Boiling water shrinkage (%) | Yarn unevenness (%) | Spinneret wipe cycle (times /24 hours) | Broken filament times (times /24 hours) | Number of broken filaments (broken filaments/9 kg package) | Finished product rate of fiber (%) | Dyeing M rate (%) | Dyed dark grain |
|---|---|---|---|---|---|---|---|---|---|---|---|---|---|
| Example 8 | Example 1-A | POY | 55.73 | 76.8 | 4.14 | 7.80 | 0.9 | 1 | 1 | 0 | 98.5 | 99.2 | No dark grains |
| Example 11 | Example 3 | POY | 55.81 | 77.5 | 3.95 | 8.65 | 1.2 | 2 | 2 | 1 | 97.3 | 98.0 | Minute quantity of dark grains |
| Example 14 | Example 4 | POY | 55.95 | 78.7 | 4.06 | 8.05 | 1.1 | 1 | 1 | 1 | 98.2 | 98.5 | No dark grains |
| Example 17 | Example 7-B | POY | 55.79 | 73.6 | 3.60 | 14.47 | 1.3 | 1 | 4 | 5 | 95.6 | 96.4 | No dark grains |
| Example 20 | Examples 1-B | POY | 55.75 | 76.7 | 4.19 | 7.64 | 0.9 | 1 | 1 | 0 | 98.4 | 99.3 | No dark grains |
| Example 23 | Example 7-C | POY | 55.81 | 72.9 | 3.12 | 9.56 | 1.2 | 2 | 3 | 3 | 96.7 | 97.4 | Minute quantity of dark grains |

Table 3 Test Results of FDY Fiber

| Fiber | Resin raw materi al | Fiber type | Linea r densit y (dtex) | Elong ation at break (%) | Break ing streng th (cN/dt ex) | Boilin g water shrink age (%) | Yarn uneve nness (%) | Spinn eret wipe cycle (times /24 hours) | Broke n filame nt times (times /24 hours) | Numb er of broke n filame nts (brok en filame nts/9 kg packa ge) | Finish ed produ ct rate of fiber (%) | Dyein g M rate (%) | Dyed dark grain |
|---|---|---|---|---|---|---|---|---|---|---|---|---|---|
| Exam ple 9 | Exam ple 1-A | FDY | 77.52 | 45.7 | 5.40 | 10.25 | 0.8 | 1 | 0 | 0 | 98.6 | 99.1 | No dark grains |
| Exam ple 12 | Exam ple 3 | FDY | 77.50 | 46.8 | 5.05 | 11.45 | 1.1 | 1 | 1 | 1 | 97.1 | 97.2 | Minut e quanti ty of dark grains |
| Exam ple 15 | Exam ple 4 | FDY | 77.96 | 47.5 | 5.28 | 10.68 | 0.9 | 1 | 1 | 0 | 98.3 | 98.6 | No dark grains |
| Exam ple 18-A | Exam ple 7-A | FDY | 77.25 | 46.2 | 4.99 | 12.62 | 0.9 | 1 | 1 | 5 | 96.2 | 97.5 | No dark grains |
| Exam ple 18-B | Exam ple 7-B | FDY | 77.15 | 45.9 | 4.92 | 12.51 | 0.9 | 1 | 4 | 6 | 96.0 | 97.1 | No dark grains |
| Exam ple 21 | Exam ples 1-B | FDY | 77.52 | 45.6 | 5.45 | 10.28 | 0.8 | 1 | 0 | 0 | 98.4 | 99.0 | No dark grains |
| Exam ple 24 | Exam ple 7-C | FDY | 77.13 | 43.3 | 5.25 | 13.98 | 0.9 | 4 | 5 | 4 | 96.8 | 98.1 | Minut e quanti ty of dark grains |

Table 4 Test Results of DTY Fiber

| Fiber | Resin raw materi al | Fiber type | Linear densit y (dtex) | Elonga tion at break (%) | Breaki ng strengt h (cN/dt ex) | Boilin g water shrink age (%) | Yarn uneven ness (%) | Broke n filame nt times (times/ 24 hours) | Numb er of broken filame nts (broke n filame nts/9 kg packag e) | Finish ed produc t rate of fiber (%) | Dyein g M rate (%) | Dyed dark grain |
|---|---|---|---|---|---|---|---|---|---|---|---|---|
| Examp le 10 | Exam pie 1-A | DTY | 44.23 | 33.5 | 4.30 | 4.8 | 0.9 | 0 | 1 | 98.4 | 99.3 | No dark grains |
| Examp le 13 | Exam ple 3 | DTY | 44.25 | 31.9 | 4.08 | 5.9 | 1.2 | 1 | 1 | 97.3 | 96.8 | Minute quantit y of dark grains |
| Examp le 16 | Exam ple 4 | DTY | 44.79 | 32.7 | 4.22 | 5.2 | 1.1 | 1 | 1 | 98.0 | 98.7 | No dark grains |
| Examp le 19 | Exam ple 7-B | DTY | 44.32 | 31.6 | 3.65 | 8.8 | 1.6 | 4 | 5 | 95.4 | 96.0 | No dark grains |
| Examp le 22 | Exam ples 1-B | DTY | 44.21 | 33.6 | 4.30 | 4.6 | 0.9 | 0 | 1 | 98.5 | 99.4 | No dark grains |
| Examp le 25 | Exam ple 7-C | DTY | 44.24 | 27.4 | 3.50 | 6.5 | 1.3 | 2 | 3 | 96.5 | 97.5 | Minute quantit y of dark grains |

It can be seen from tables 1 to 4 that the polyamide resin of the present disclosure has a low content of water-extractable substance, and the fiber prepared from the polyamide resin has an excellent elongation at break, a breaking strength, a lower boiling water shrinkage, lower yarn unevenness, and the like. In addition, the spinning process has less broken filament times and long spinneret wipe cycle time; the yarn unevenness of fiber obtained by spinning is low, the dyeing evenness is improved, and the dyeing M rate is high. Resins containing less water-extractable substance can reduce the precipitation and coagulation of the water-extractable substance below the spinneret during the spinning process, thereby avoiding excessive precipitation of water-extractable substance that may result in phenomena such as floating filaments, broken monofilaments and frequent spinneret wiping, etc., during the spinning process, further improving the finished product rate of fiber.

Finally, it should be noted that the above examples are intended only to explain the technical solutions of the present disclosure, rather than limiting thereto. Although the present disclosure has been described in detail with reference to the forgoing examples, those skilled in the art should understand that modifications can still be made to the technical solutions set forth in the preceding examples, or equivalent substitutions can be made to part or all of the technical features thereof, and these modifications or substitutions do not make the essence of the corresponding technical solutions depart from the scope of the technical solutions in the examples of the present disclosure.

## Claims

1. A polyamide resin, wherein the polyamide comprises diamine structural units and diacid structural units, wherein 90 mol% or more of the diacid structural units are derived from adipic acid, 90 mol% or more of the diamine structural units are derived from 1,5-pentanediamine, and the polyamide resin contains a water-extractable substance in a content of 0.7 wt.% or less.

2. The polyamide resin according to claim 1, wherein,

   the polyamide resin has a number average molecular weight of 28,000 or more, preferably 30,000 to 45,000, and more preferably 30,000 to 40,000; and/or
   the water-extractable substance is contained in a content of 0.6 wt.% or less, preferably 0.5 wt.% or less; and/or
   the water-extractable substance is contained in a content of 0.05 wt.% or more, preferably 0.1 wt.% or more, and more preferably 0.2 wt.% or more; and/or
   95 mol% or more, preferably 97 mol% or more of the diamine structural units in the polyamide resin are derived from 1,5-pentanediamine; and/or
   the diamine structural units of the polyamide resin further comprise one or more structural units derived from butanediamine, hexanediamine, decanediamine and dodecanediamine; and/or
   95 mol% or more, preferably 97 mol% or more of the diacid structural units in the polyamide resin are derived from adipic acid; and/or

   the diacid structural units of the polyamide resin further comprise one or more structural units derived from succinic acid, glutaric acid, pimelic acid, suberic acid, azelaic acid, sebacic acid, undecandioic acid, dodecanedioic acid, tridecanedioic acid, tetradecandioic acid, pentadecandioic acid, hexadecanedioic acid, heptadecanedioic acid, octadecandioic acid, terephthalic acid, isophthalic acid, and phthalic acid; and/or
   the polyamide resin contains polyamide composed of diamine structural units and diacid structural units in a content of 90 wt.% or more, preferably 95 wt.% or more, more preferably 97 wt.% or more, and still more preferably 99 wt.% or more; and/or
   the polyamide resin contains an additive in a content of less than or equal to 10 wt.%, preferably less than or equal to 5 wt.%, more preferably less than or equal to 3 wt.%, and more preferably less than or equal to 1 wt.%.

3. The polyamide resin according to claim 1 or 2, wherein the water-extractable substance comprises one or two of the following structures:

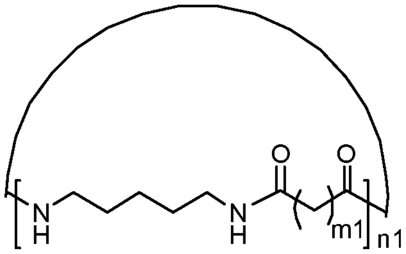, 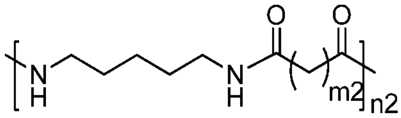,

wherein, n1 and n2 are respectively an integer selected from 1 to 8, preferably n1 and n2 are respectively an integer selected from 1 to 6, more preferably n1 and n2 are respectively an integer selected from 1 to 5, still more preferably n1 is 2, 3 or 4; n2 is 2, 3, 4 or 5; and each of m1 and m2 is 4; and/or
the water-extractable substance has a number average molecular weight of 500 to 2,000; and/or
the polyamide resin is polyamide 56 resin, and the polyamide 56 resin contains polyamide 56 in a content of 90 wt.% or more, preferably 95 wt.% or more, more preferably 97 wt.% or more, and still more preferably 99 wt.% or more.

**4.** The polyamide resin according to claim 2, wherein,

the additive comprises, but is not limited to any one of an end capping agent, a nucleating agent, an antioxidant, a defoamer, and a flow modifier, or a combination thereof; and/or
the additive comprises any one of lauric acid, stearic acid, benzoic acid, acetic acid, sodium hypophosphite, calcium hypophosphite, phosphorous acid, silicone defoamer, caprolactam, carbon black, nano calcium carbonate, titanium dioxide, and phthalocyanine compounds, or a mixture thereof.

**5.** The polyamide resin according to claim 1 or 2, wherein the polyamide resin contains moisture in a content of 200 to 2,000 ppm, preferably 250 to 1,200 ppm, and more preferably 300 to 1,000 ppm; and/or

the polyamide resin contains terminal amino groups in a content of 10 to 100 mol/ton, preferably 20 to 90 mol/ton, more preferably 30 to 80 mol/ton; and/or
the polyamide resin has a relative viscosity of 1.8 to 4.0, preferably 2.2 to 3.5, and more preferably 2.4 to 3.3.

**6.** A method for preparing the polyamide resin according to any one of claims 1 to 5, wherein the method comprises the steps of:

S1, preparing a nylon salt solution in an inactive gas atmosphere;
S2, heating the nylon salt solution to increase the pressure of the nylon salt solution reaction system to 0.5-2.5 MPa, maintaining the pressure by degassing for 0.5 to 4 hours, and then depressurizing to reduce the pressure in the reaction system to 0-0.7 MPa, then vacuumizing the reaction system to a vacuum of -0.05 to -0.08 MPa, thereby obtaining a polyamide melt; and
S3, discharging the obtained melt, and carrying out strand pelletizing to obtain polyamide chips.

**7.** The method according to claim 6, wherein,

in step S1, 1,5-pentanediamine and diacid are used in a molar ratio of (1-1.1) : 1 in order to prepare the nylon salt solution; and/or
in step S2, after the process of maintaining pressure is completed, the reaction system has a temperature of 232 to 260 °C; and/or
in step S2, after the process of depressurizing is completed, the reaction system has a temperature of 240 to 295 °C; and/or
in step S2, after vacuumizing, the reaction system has a temperature of 250 to 290 °C; and/or
in step S2, after vacuumizing, the vacuum of the reaction system is maintained for 11 to 75 minutes; and/or
in step S3, the strand pelletizing is carried out in water at a water temperature of 15 to 50 °C.

**8.** The method according to claim 7, wherein, it further comprises the steps of:

S4, mixing the polyamide chips with water in a reactor to obtain a mixture, and then replacing the air in the

reactor with an inactive gas; and
S5, heating the mixture in an inactive gas atmosphere, filtering the mixture, rinsing the polyamide chips, and drying the polyamide chips to obtain the polyamide resin.

**9.** The method according to claim 8, wherein,

in step S4, the reactor is selected from a continuous extraction column and a batch reaction kettle; and/or
in step S4, replacing the air in the reactor includes vacuumizing the reactor with a vacuum pump and then refilling the reactor with an inactive gas; and/or
in step S4, replacing the air in the reactor is repeated twice or more; and/or
in step S4, the water is deionized water, preferably deionized water subjected to deoxygenation treatment; and/or
in step S4, the mass of the water is 1 time or more, preferably 2 times or more, for example 1 to 12 times, 2 to 10 times, and 2 to 6 times than that of the polyamide chips; and/or
in step S4 and step S5, the inactive gas is one or more selected from nitrogen gas, argon gas, and helium gas, etc; and/or
in step S5, the mixture is heated for 4 to 50 hours, preferably 8 to 45 hours; and/or
in step S5, the mixture is heated at a temperature of 80 to 140 °C, preferably 85 to 120 °C; and/or
in step S5, the polyamide chips are rinsed with hot water at a temperature of 50 °C to 100 °C; and/or
in step S5, the polyamide chips are dried by one or more selected from vacuum drying, freeze-drying, airflow drying, microwave drying, infrared drying, and high-frequency drying.

**10.** A method for preparing the polyamide resin according to any one of claims 1 to 5, wherein, the method comprises the steps of:

(1) mixing the polyamide chips with water in a reactor to obtain a mixture, then replacing the air in the reactor with an inactive gas; and
(2) heating the mixture in an inactive gas atmosphere, filtering the polyamide chips, rinsing the polyamide chips, and drying the polyamide chips to obtain the polyamide resin.

**11.** A resin composition comprising the polyamide resin according to any one of claims 1 to 5 as a component.

**12.** A fiber which is prepared using the polyamide resin according to any one of claims 1 to 5 or the resin composition according to claim 11 as a raw material.

**13.** The fiber according to claim 12, wherein,

the fiber comprises preoriented yarns, medium oriented yarns, high-oriented yarns, draw textured yarns, full-drawn yarns, industrial yarns, bulky continuous filaments, short fibers, and monofilament fibers; and/or
the fiber has a breaking strength of 3.3 to 10.0 cN/dtex, preferably 3.5 to 9.0 cN/dtex, and more preferably 4.0 to 8.5 cN/dtex; and/or
the fiber has an elongation at break of 10% to 90%, preferably 15% to 80%, and more preferably 18% to 55%; and/or
the fiber has a boiling water shrinkage of 1.0% to 13.8%, preferably 3.0% to 12.0%, and more preferably 4.0% to 10.0%; and/or
the fiber has a linear density of 11 to 2330 dtex, preferably 33.0 to 933 dtex, and more preferably 44.0 to 555 dtex; and/or
the fiber has yarn unevenness of less than or equal to 1.5%, preferably less than or equal to 1.3%, more preferably less than or equal to 1.2%, and even more preferably less than or equal to 1.0%; and/or
the fiber has broken yarn times of less than or equal to 2 (times/24 hours), preferably less than or equal to 1 (time/24 hours), and more preferably 0 (time/24 hours); and/or
the fiber has a number of broken filaments of less than or equal to 3 (broken filaments/9 kg package), preferably less than or equal to 2 (broken filaments/9 kg package), and more preferably less than or equal to 1 (broken filament/9 kg package); and/or
the fiber has a finished product rate of 96% or more, preferably 97% or more, and more preferably 98% or more; and/or
the fiber has a dyeing M rate of 96% or more, preferably 97% or more, and more preferably 98.5% or more.

**14.** A method for preparing the fiber according to claim 12 or 13, wherein the method comprises the steps of:

(a) heating the polyamide resin to a molten state so as to form a polyamide melt;
(b) spinning the polyamide melt to form an as-spun yarn; and
(c) post-processing the as-spun yarn to obtain the polyamide fiber.

**15.** The method according to claim 14, wherein, during the fiber preparation process, the spinneret wipe cycle is less than or equal to 3 (times/24 hours), preferably less than or equal to 2 (times/24 hours), and more preferably less than or equal to 1 (time/24 hours).

## INTERNATIONAL SEARCH REPORT

International application No.
**PCT/CN2022/071923**

**A. CLASSIFICATION OF SUBJECT MATTER**

C08G 69/46(2006.01)i; C08G 69/26(2006.01)i

According to International Patent Classification (IPC) or to both national classification and IPC

**B. FIELDS SEARCHED**

Minimum documentation searched (classification system followed by classification symbols)

C08G 69/-

Documentation searched other than minimum documentation to the extent that such documents are included in the fields searched

Electronic data base consulted during the international search (name of data base and, where practicable, search terms used)

CNKI; CPRSABS; EPODOC; WPI: 凯赛, 聚酰胺, 尼龙, PA, 戊二胺, 水洗, 萃取, 抽提, 低聚物, 低分子量, polyamide, nylon, pentamethylendiamine, wash+, extract+, low molecular, oligomer

**C. DOCUMENTS CONSIDERED TO BE RELEVANT**

| Category* | Citation of document, with indication, where appropriate, of the relevant passages | Relevant to claim No. |
|---|---|---|
| X | CN 108503824 A (SHANGHAI CATHAY BIOTECHNOLOGY RESEARCH CENTER CO., LTD.) 07 September 2018 (2018-09-07) description, paragraphs [0005]-[0048] | 1-7, 10-15 |
| Y | CN 108503824 A (SHANGHAI CATHAY BIOTECHNOLOGY RESEARCH CENTER CO., LTD.) 07 September 2018 (2018-09-07) description, paragraphs [0005]-[0048] | 8, 9 |
| X | CN 108503826 A (SHANGHAI CATHAY BIOTECHNOLOGY RESEARCH CENTER CO., LTD.) 07 September 2018 (2018-09-07) claims 1-9 | 1-7, 10-15 |
| Y | CN 108503826 A (SHANGHAI CATHAY BIOTECHNOLOGY RESEARCH CENTER CO., LTD.) 07 September 2018 (2018-09-07) claims 1-9 | 8, 9 |
| X | CN 111378121 A (CATHAY BIOTECH INC. et al.) 07 July 2020 (2020-07-07) claims 1-12 | 1-7, 10-15 |
| Y | CN 111378121 A (CATHAY BIOTECH INC. et al.) 07 July 2020 (2020-07-07) claims 1-12 | 8, 9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 April 2022** | **18 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/071923**

**C. DOCUMENTS CONSIDERED TO BE RELEVANT**

| Category* | Citation of document, with indication, where appropriate, of the relevant passages | Relevant to claim No. |
|---|---|---|
| Y | CN 103483580 A (JIANGSU HAIYANG CHEMICAL FIBERS CO., LTD.) 01 January 2014 (2014-01-01)<br>description, paragraphs 0003 and 0021-0026 | 8, 9 |
| Y | US 3149095 A (BEMBERG SPA) 15 September 1964 (1964-09-15)<br>description, column 1 line 45-column 3 line 32 | 8, 9 |

Form PCT/ISA/210 (second sheet) (January 2015)

**INTERNATIONAL SEARCH REPORT**
**Information on patent family members**

International application No.
**PCT/CN2022/071923**

| Patent document cited in search report | | | Publication date (day/month/year) | Patent family member(s) | | | Publication date (day/month/year) |
|---|---|---|---|---|---|---|---|
| CN | 108503824 | A | 07 September 2018 | None | | | |
| CN | 108503826 | A | 07 September 2018 | None | | | |
| CN | 111378121 | A | 07 July 2020 | None | | | |
| CN | 103483580 | A | 01 January 2014 | None | | | |
| US | 3149095 | A | 15 September 1964 | NL | 255216 | A | |
| | | | | FR | 1298294 | A | 06 July 1962 |
| | | | | NL | 125467 | C | |
| | | | | CH | 392885 | A | 31 May 1965 |
| | | | | DE | 1157392 | B | 14 November 1963 |
| | | | | BE | 607356 | A | 18 December 1961 |
| | | | | ES | 270061 | A1 | 01 January 1962 |
| | | | | GB | 942691 | A | 27 November 1963 |

Form PCT/ISA/210 (patent family annex) (January 2015)